# EUROPEAN PATENT APPLICATION

(11) **EP 2 380 735 A1**
(43) Date of publication of application: **26.10.2011**
(21) Application number: 10733469.0
(22) Date of filing: 19.01.2010
(51) Int. Cl.: B32B 27/36, B32B 27/22, B65D 65/40

(54) **MULTILAYER FILM**

(30) Priority: 20.01.2009 JP 2009009614
(71) Applicant: Mitsubishi Plastics, Inc., Tokyo 103-0021 (JP)
(72) Inventor: SUZUKI, Maiko, Nagahama-shi Shiga 526-8660 (JP); NEMOTO, Tomoyuki, Nagahama-shi Shiga 526-8660 (JP)
(74) Representative: Gille Hrabal Struck Neidlein Prop Roos
(86) International application number: PCT/JP2010/050572
(87) International publication number: WO 2010/084862

(57) **Abstract**

Disclosed is a multilayer film which uses a lactic acid polymer as a main raw material and is suppressed in generation of an annoying odor. Specifically disclosed is a multilayer film which comprises at least three layers including a surface layer and an intermediate layer containing a lactic acid polymer (B) and a plasticizer (C). The multilayer film is **characterized in that** the detected amount of lactic acid oligomer components is controlled to 50 ng/cm² or less, or that the amount of odor components derived from the plasticizer is controlled to 50 ng/cm² or less.

## Description

### TECHNICAL FIELD

The present invention relates to a multilayer film which uses a lactic acid polymer derived from natural plants as one of main materials. Specifically, it relates to a multilayer film which is suppressed in generation of an annoying odor and can be preferably used as a packaging film.

### BACKGROUND ART

Recently, with increasing concern over the environmental problems, plastic products are ultimately required not to show any adverse effect on a natural environment when they are left therein, i.e., they are required to degraded or disappeared with passage of time. Since conventional plastics are stable in a natural environment for a long period of time and have small volume, problems have arisen in that they not only have an adverse effect on the natural environment but also can promote short lifespan of a waste landfill and damage the scenery and living environment for wildlife plants and animals.

From the viewpoint of the above, importance of effective use of exhaustible resources is realized and a resin derived from a natural plant is being noticed. In particular, there is much attention towards a lactic acid polymer as it is a resin derived from starch of a natural plant such as corn and potato, thus it can be produced on a massive scale, and as having excellent transparency, its importance as a raw material for packaging film is being noticed. A packaging film using the lactic acid polymer as a raw material, for example, a wrap film for packaging (in the invention, to distinguish it from a stretch packaging film for business use, it is also referred to as "small size wrap film roll") is currently under development.

Meanwhile, as the lactic acid polymer in an unoriented state is hard and brittle, physical properties are significantly modified by stretching or orientation, or for a wrap film for packaging, softening is carried out by adding a plasticizer, or the like.

With regard to a packaging film which uses a lactic acid as a raw material, for example, Patent Document 1 discloses a biodegradable wrap film simultaneously having cuttability, packaging capability, and heat resistance, which are the characteristics of a small size wrap film roll, i.e., a biodegradable wrap film composed mainly of a lactic acid resin composition, wherein the lactic acid composition exhibits, as measured at a frequency of 10 Hz and a strain of 0.1 % by the dynamic viscoelasticity measuring method according to the method of JIS K-7198 A, a storage modulus of 100 MPa to 3 GPa at 40°C and storage modulus of 30 MPa to 500 MPa at 100°C and exhibits a peak value of loss tangent (tanδ) of 0.1 to 0.8, and the lactic acid resin composition contains the lactic acid polymer and a plasticizer in mass ratio of 60 : 1 to 99 : 1.

It is disclosed in Patent Document 2 a shrinked sheet material which comprises an outermost layer containing an olefin polymer as a main component, wherein at least one layer containing a polylactic acid (i.e., lactic acid polymer) as a main component is disposed between the layers containing the olefin polymer as a main component. It is also disclosed that, an adhesive layer consisting of an acryl modified polyethylene resin may be disposed between the layer containing an olefin polymer as a main component and the layer containing polylactic acid as a main component.

However, according to the series of Patent Document 1 in which a plasticizer is blended with a lactic acid polymer, transition temperature (Tg) of the lactic acid polymer is lowered to room temperature or so. As such, when a wrap film is produced by rapid cooling such as casting method, sheeting may occur as the polymer remains in a non-crystalline state so that the elasticity is impaired. There is also a problem in that, when it is rolled as it is, blocking occurs in a rolled product.
There is also a problem in that, when the lactic acid polymer is exposed on surface layer of a wrap film, molecular weight of the lactic acid polymer decreases with passage of time due to the hydrolysis, and as a result, the blocking may occur more easily.
To obtain a desired function of a small size wrap film roll, in addition to transparency, properties such as adhesiveness to a container and cuttability at the time of cutting a pulled-out film, or the like, are required. However, it is not an easy task to produce a small size wrap film roll having such properties by using the lactic acid polymer as a main raw material. In particular, such as the multilayer film having a multilayer structure as disclosed in Patent Document 2, producing a film having excellent adhesiveness to a container cannot be easily achieved.

Under the circumstances, as a small size wrap film roll containing a lactic acid polymer as one of raw materials, a packaging film as follows which does not suffer from any blocking even when the film is stored in a rolled state, has reduced molecular weight decrease of the lactic acid polymer, and can satisfy characteristics that are required for a small size wrap film roll is suggested (Patent Document 3).

Patent Document 3 discloses a packaging film consisting of a multilayer film having at least five layers of at least surface layer/adhesive layer/intermediate layer/adhesive layer/surface layer in this order, which is characterized in that both the surface layers contain an olefin polymer as the main component, the intermediate layer contains a lactic acid polymer as the main component, and both the adhesive layers contain an adhesive resin as the main component, and the adhesive resin is a resin consisting of one or a combination of two or more modified olefin polymers, copolymers of soft aromatic hydrocarbon and conjugated diene hydrocarbon or hydrogenated derivatives of the copolymers, ethylene and vinyl acetate copolymer having vinyl acetate content of 30 to 80% by mass, or a lactic acid and acrylate mixture resin which has a lactic acid polymer and an acryl block copolymer having a polymer block in which acrylic ester unit is contained as main component and a polymer block in which methacrylate ester unit is contained as main component.

Patent Document 1: WO/2005/082981
Patent Document 2: Japanese Patent Application Laid-Open (JP-A) No. 2002-19053
Patent Document 3: WO/2008/00451 0

### SUMMARY OF THE INVENTION

When a multilayer film is produced by blending a plasticizer to improve flexibility of a lactic acid polymer, even if a surface layer having no plasticizer is laminated, annoying odor may occur when the film is stored in high temperature and high humidity condition, brought into contact with water, or heated.
In this connection, the invention provides a multilayer film which uses a lactic acid polymer as a main raw material, specifically a new multilayer film which is prepared so as to effectively suppress the generation of annoying odor.

Provided by the invention is a multilayer film which has at least three layers including a surface layer and an intermediate layer that contains a lactic acid polymer (B) and a plasticizer (C), which is characterized in that the detected amount of lactic acid oligomer components is controlled to 50 ng/cm² or less, or that the amount of odor components derived from the plasticizer is controlled to 50 ng/cm² or less wherein the detection is made according to the detection condition described below.
Detection condition: a head space gas chromatography mass analyzer (HS-GC-MS) is used, and detection is carried out by setting the sample temperature of the head space sampler (HS) at 60°C and heating time for 30 minutes.

To produce the multilayer film as described above, for example for the process of producing a multilayer film, it is most effective to withdraw the odor causing substance by suction through a vent port in a monoaxial or biaxial extruder during a process of melt-kneading a composition for forming an intermediate layer.

Regarding the annoying odor that is generated at the time of producing a multilayer film by blending a plasticizer with a lactic acid polymer, it is assumed that the odor is generated when the film is stored under high temperature and high humidity condition or brought into contact with water, or the like, so that hydrolysis of the lactic acid polymer is promoted to produce a lactic acid oligomer, or the odor is generated according to volatilization of a plasticizer present within the film when the film is heated. Accordingly, by having the detected amount of lactic acid oligomer components controlled to 50 ng/cm² or less, or having the amount of odor components derived from the plasticizer controlled to 50 ng/cm² or less wherein the detection is made according to detection condition described above, generation of annoying odor can be effectively suppressed even when the film is stored under high temperature and high humidity condition, brought into contact with water, or the like, or heated.

### DETAILED DESCRIPTION OF THE INVENTION

Herein below, the multilayer film as an exemplary embodiment of the invention is explained (herein below, referred to as the "multilayer film of the invention"). However, scope of the invention is not limited to the embodiments given below.

The multilayer film of the invention is a multilayer film having at least three layers, i.e., a multilayer film having "both inner and outer surface layers (herein below, simply referred to as the "surface layer")" containing a transparent resin as a main component and "intermediate layer" containing a lactic acid polymer (B) and a plasticizer (C) as a main component.

Herein below, the surface layer and the intermediate layer which constitute the multilayer film of the invention are explained. After that, the multilayer constitution, characteristic property values, and method for producing the film are explained in this order.

### <Surface Layer>

For the multilayer film of the invention, any transparent resin with flexibility can be used as a main component of the surface layer. Examples of the resin which can be used as a main component of the surface layer include an olefin polymer, a polyester polymer such as PET, PBT, PEN, and PBN, and the like, an acrylate polymer such as PMMA, and the like, and a nylon resin. Of these, from the viewpoint of transparency and self adhesiveness, the olefin polymer is preferable.
Next, the olefin polymer (A) that is appropriate as a main component of the surface layer is explained in greater detail.

### (Olefin polymer (A))

Examples of the olefin polymer (A) that is appropriate as a main component of the surface layer include an ethylene polymer, a butylene polymer, a propylene polymer such as polypropylene and ethylene-propylene copolymer, poly 4-methylpentene, polybutene, and ethylene-vinyl acetate copolymer. The resin may be one type of the resins described above or a mixture resin having a combination of the two or more types.
Further, a polyolefin thermoplastic elastomer obtained by dispersion and compounding of ethylene and propylene rubber, or the like, may be also used.

Of these, considering various roles required for the surface layer, i.e., surface-specific function such as inhibition of blocking at the time of using it as a packaging film, suppressed generation of odor, maintaining appropriate balance between slipping property and surface adhesiveness, and inhibition of fogging, stabilization of molding processability during film production, and inhibition of molecular weight decrease of the lactic acid polymer (B) with passage of time due to hydrolysis, or the like, the main component of the surface layer is preferably an ethylene polymer.

Examples of the ethylene polymer include one type of the ethylene polymer selected from low density polyethylene, linear low density polyethylene, linear ultra-low density polyethylene, medium density polyethylene, and high density polyethylene, or a mixture resin having a combination of two or more types, or a copolymer containing ethylene as a main component, i.e., α-olefin having 3 to 10 carbon atoms such as ethylene, propylene, but-1-ene, pent-1-ene, hex-1-ene, hept-1-ene, and oct-1-ene; vinyl ester such as vinyl acetate and vinyl propylenic acid; unsaturated carboxylic acid ester such as methyl acrylate, ethyl acrylate, methyl methacrylate, and ethyl methacrylate, a copolymer or a multicomponent copolymer with one or more comonomers selected from unsaturated compounds such as conjugated diene and non-conjugated diene, or a mixture resin having two or more kinds of the ethylene polymer, copolymer, or multicomponent copolymer. Content of the ethylene unit in the ethylene polymer is preferably 50% by mass or more.
Among the above, one type of the ethylene polymer selected from low density polyethylene, linear low density polyethylene, linear ultra-low density polyethylene, ethylene-vinyl acetate copolymer, ethylene-acrylate ester copolymer and ethylene-methacrylate ester copolymer, or a mixture resin having a combination of two or more types of them is particularly preferable.
Examples of the acrylate ester in the ethylene-acrylate ester copolymer include methyl acrylate and ethyl acrylate, and examples of the methacrylate ester in the ethylene-methacrylate ester copolymer include methyl methacrylate and ethyl methacrylate.

Further, when surface characteristics such as balanced surface adhesiveness and anti-fogging property and molding process stability during film production are important, ethylene-vinyl acetate copolymer which has vinyl acetate content of 10 to 60% by mass and melt flow rate of 0.2 to 20 g/10 min is preferable (herein below, it may be abbreviated as "MFR." MFR measurement condition includes 190°C and a load of 21.18 N based on JIS K 7210. It is the same for other MFRs).
When the vinyl acetate content is 10% by mass or more in an ethylene-vinyl acetate copolymer, the film is not hard as crystallinity is low and it has favorable flexibility or elastic recovery, and surface adhesiveness can be easily exhibited, and therefore desirable. Meanwhile, if the content is 60% by mass or less, heat resistance or film strength, or the like, can be obtained, and bleed-out can be inhibited even when an anti-fogging agent, or the like, is added. Further, as the surface adhesiveness is not excessively strong, unwinding property of the film or appearance of the film can be improved, and therefore desirable. From this point of view, the vinyl acetate content is preferably from 10 to 58% by mass in an ethylene-vinyl acetate copolymer, and more preferably from 12 to 56% by mass.
Further, when MFR of the ethylene-vinyl acetate copolymer is 0.2 g/10 min or more, extrusion processability is stabilized. When it is 20 g/10 min or less, the film can be stably produced during molding, and at the same time, thickness variation, decrease or imbalance in dynamic strength is reduced, and therefore desirable. From this point of view, MFR of the ethylene-vinyl acetate copolymer is preferably 0.5 to 18 g/10 min, and more preferably from 1 to 15 g/10 min.

Meanwhile, when heat resistance in a microwave oven is important to overcome microwave heating, linear low density polyethylene having density of from 0.90 to 0.95 g/cm³ and MFR of 0.2 to 20 g/10 min is particularly preferable.
When the density of the ethylene polymer is within this range, the film is not hard as crystallinity is moderate and it has favorable flexibility or elastic recovery. Further, as the melting point of the ethylene polymer is higher than the actual use temperature of a wrap, specifically the atmospheric temperature at the time of heating with a microwave oven, or the like, a problem of melting and adhesion of the film onto a food container, or the like, is not caused even when a food product is wrapped with the film and heated in a microwave, or the like, and therefore desirable.
From this point of view, density of the ethylene polymer is preferably 0.90 to 0.94 g/cm³, and more preferably from 0.91 to 0.94 g/cm³.
When MFR of the ethylene polymer is 0.2 g/10 min or more, extrusion processability is stabilized. When MFR is 20 g/10 min or less, the film can be stably produced during molding, and at the same time, thickness variation, decrease or imbalance in dynamic strength is reduced, and therefore desirable. From this point of view, MFR of the ethylene polymer (A) is preferably 0.5 to 18 g/10 min, and more preferably from 1 to 15 g/10 min.

Method of producing the ethylene polymer is not specifically limited, and it includes a known polymerization method using a known catalyst for olefin polymerization, for example, a slurry polymerization using a multi-site catalyst represented by Ziegler-Natta catalyst or a single-site catalyst represented by metallocene catalyst, a solution polymerization, a bulk polymerization, a gas phase polymerization, and a bulk polymerization using a radical initiator.

### (Other additives)

To provide the surface layer with a function such as anti-fogging property, antistaticity, sliding property, and adhesiveness, various additives as follows may be blended in the surface layer.
Examples thereof include aliphatic alcohol fatty acid ester between aliphatic alcohol having 1 to 12 carbon atoms, preferably 1 to 6 carbon atoms and fatty acid having 10 to 22 carbon atoms, preferably 12 to 18 carbon atoms, specifically, monoglycerin oleate, polyglycerin oleate, polyglycerin polyrecinoleate, glycerin trirecinoleate, glycerin acetylrecinoleate, polyglycerin stearate, polyglycerin laurate, methylacetyl ricinate, ethylacetyl ricinate, butylacetyl ricinate, propylene glycol oleate, propylene glycol laurate, pentaerythritol oleate, polyethylene glycol oleate, polypropylene glycol oleate, sorbitan oleate, sorbitan laurate, polyethylene glycol sorbitan oleate, and polyethylene glycol sorbitan laurate, and polyalkylene ether polyol, specifically polyethylene glycol and polypropylene glycol, and paraffin-based oil, and at least one of them can be blended in an amount of 0.1 to 12 parts by mass, and preferably 1 to 8 parts by mass with respect to 100 parts by mass of the resin component.

### <Intermediate layer>

The intermediate layer contains the lactic acid polymer (B) and the plasticizer (C) as a main component.

### (Lactic acid polymer (B))

As for the lactic acid polymer (B), poly(L-lactic acid) having a structural unit of L-lactic acid, poly(D-lactic acid) having a structural unit of D-lactic acid, poly(DL-lactic acid) having a structural unit of L-lactic acid and D-lactic acid, or their mixture, or a copolymer containing them can be used.
Although the poly(L-lactic acid) or poly(D-lactic acid) described herein means a polymer ideally consisting of 100% of L-lactic acid or D-lactic acid, as there is a possibility that a different lactic acid is inadvertently included during polymerization, it generally means a polymer consisting of 98% or more of L-lactic acid or D-lactic acid.

In the lactic acid polymer (B), the ratio (i.e., molar ratio) between D-lactic acid (D form) and L-lactic acid (L form) is preferably, L form/D form = 100/0 to 85/15, or L form/D form = 0/100 to 15/85, more preferably it is L form/D form = 99.5/0.5 to 85/15 or L form/D form = 0.5/99.5 to 15/85. Within this range, heat resistance of a film obtained is not impaired.
A lactic acid polymer having different copolymerization ratio of L form and D form may be also blended in. In such case, the average copolymerization ratio of L form and D form in the plural lactic acid polymers is preferably within the above range.

Further, from the viewpoint of inhibiting bleed-out of a plasticizer, or the like, low crystalline lactic acid polymer is preferable. Thus, the polylactic acid which has lower crystallinity than poly(L-lactic acid), for example, poly(D-lactic acid), poly(DL-lactic acid), or their mixture is preferably used as a main component. The ratio of D form and L form in such poly(DL-lactic acid) or the mixture is preferably L form/D form = 85/15 to 95/5, or L form/D form = 5/95 to 15/85. Within this range, as the crystallinity of the lactic acid polymer is low, bleed-out of a plasticizer, or the like, can be inhibited.

Meanwhile, from the viewpoint of inhibiting the generation of an oligomer that is included in the lactic acid polymer for odor suppression, the lactic acid polymer preferably has high crystallinity. In this regard, the lactic acid polymer containing poly(L-lactic acid) as a main component is preferable. Specifically, the lactic acid polymer with composition of having poly(L-lactic acid) in an amount of 50% or more, preferably 75% or more, and more preferably 90% or more (including 100%) is preferable. Also from the viewpoint of obtaining heat resistance, the lactic acid polymer preferably has high crystallinity.
When a mixture resin of two or more lactic acid polymers having different LD ratio is used, the average value considering their mass ratio is preferably within the range described above.

From the viewpoint of inhibiting bleed-out of the plasticizer and obtaining balance between heat resistance and suppressed odor derived from lactic acid oligomer, although it may also vary depending on the type of the resin used as a main component for both surface layers, a mixture resin composition of poly(L-lactic acid) with D form content of 0.5 to 5 mol% (herein below, it may be abbreviated as "component B-1") and poly(D,L-lactic acid) with D form content of 10 to 15 mol% (herein below, it may be abbreviated as "component B-2") is preferable. In particular, the mixing ratio between component (B-1) and component (B-2), i.e., (B-1)/(B-2), is more preferably 10/90 to 80/20, among which in particular a mixture resin composition wherein (B-1)/(B-2) = 50/50 to 70/30 is still more preferable.

The lactic acid polymer may contain, as a copolymerizable component, a small amount of other hydroxy carboxylic acid, or the like. Further, it may contain a small amount of a chain extender residue.

As for the method of polymerizing the lactic acid polymer, a known polymerization method such as condensation polymerization, ring-opening polymerization, or the like, may be used.
For example, in condensation polymerization method, by directly carrying out dehydration condensation polymerization of L-lactic acid, D-lactic acid, or a mixture thereof, a lactic acid polymer having any composition can be obtained.
Further, in ring-opening polymerization method (referred to as "lactide method"), by using lactide which is a cyclic dimer of lactic acid with a polymerization adjuster in the presence of catalyst, if necessary, a lactic acid polymer having any composition and any crystallinity can be obtained.
Among the lactides, there is a L-lactide which is a dimer of L-lactic acid, a D-lactide which is a dimer of D-lactic acid, and a DL-lactide which is made of L-lactic acid and D-lactic acid. By mixing and polymerizing the lactide as required, it is possible to obtain a lactic acid polymer having any composition and any crystallinity.

Weight average molecular weight of the lactic acid polymer is preferably from 50,000 to 400,000, and more preferably from 100,000 to 250,000. When the weight average molecular weight of the lactic acid polymer is 50,000 or more, useful properties such as mechanical property and heat resistance can be obtained. When it is 400,000 or less, melting viscosity becomes very high, and therefore molding processability is not impaired.

As for the lactic acid polymer to be used for the multilayer film of the invention, commercially available lactic acid polymer can be used. Examples of the commercially available lactic acid polymer include "LACEA" series (trade name, manufactured by Mitsui Chemicals, Inc.), "NATURE WORKS" series (trade name, manufactured by Nature Works LLC), and "U'z SERIES" (trade name, manufactured by Toyota Motor Corporation).

### (Plasticizer (C))

Type of the plasticizer (C) is not specifically limited, if it can be used for plasiticization of the lactic acid polymer (B). Examples of the plasticizer include esters compound such as phthalic acid ester, adipic acid ester, trimellitic acid ester, phosphoric acid ester, adipic acid polyester and glycerin fatty acid ester, and other plasticizers. Of these, from the viewpoint of having good compatibility with the lactic acid polymer, glycerin fatty acid ester is preferably used.

Examples of the glycerin fatty acid ester include polyglycerin fatty acid esters such as diglycerin, triglycerin, and tetraglycerin as well as monoglyceride, diglyceride, triglyceride, and acetylated monoglyceride. Of these, from the viewpoint of having good compatibility with the lactic acid polymer and high plasticizing ability, acetylated monoglyceride having the molecular structure as the following chemical formula (1) is particularly preferable.

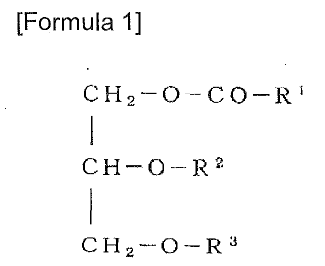

In the formula (1), R¹ represents an alkyl group, and R² and R³ each represent an acetyl group or a hydrogen. The number of carbon atoms in the alkyl group is not specifically limited. Rather, it is appropriately selected to achieve the purpose of improving adhesiveness and flexibility. In general, it is preferably from 6 to 20.

Among the above acetylated monoglycerides, from the viewpoint of further reducing an odor component derived from the plasticizer, glycerin diacet monoester (C-1) is preferable.
Glycerin diacet monoester (C-1) has the formula (1) in which R¹ is an alkyl group and R² and R³ are an acetyl group.
Glycerin diacet monoester (C-1) is preferable in that it is relatively stable at high temperature and can suppress the odor derived from the plasticizer as it can inhibit volatilization, or the like, of the plasticizer when mixed with a resin. It is also preferable in that it can exhibit a stable plasiticizing performance.

Meanwhile, to suppress the bleed-out of the plasticizer (C), it is preferable to use the glycerin monoacet monoester (C-2).
The glycerin monoacet monoester (C-2) has the formula (1) in which R¹ is an alkyl group and one of R² and R³ is an acetyl group and the other is a hydrogen atom.
The glycerin monoacet monoester (C-2) is preferable in that it has good plasticizing ability and can substantially reduce the amount of the plasticizer added to the resin to be mixed.

A mixture of the glycerin diacet monoester (C-1) and the glycerin monoacet monoester (C-2) can be also appropriately used. In such case, the mixing ratio between the glycerin diacet monoester (C-1) and the glycerin monoacet monoester (C-2), i.e., (C-1)/(C-2), is preferably from 10/90 to 100/0. More preferably, it is from 10/90 to 60/40, and still more preferably from 20/80 to 50/50.
By having the mixing ratio of the (C-1) and (C-2) in this range, the plasticizing performance can be fully exhibited, and therefore desirable.

When the multilayer film of the invention is used as a packaging material such as a wrap film for packaging that is brought into contact with a food product, from the viewpoint of safety and hygiene, total acetylation degree of the glycerin fatty acid ester is preferably low. In case of the acetylated monoglyceride above, total acetylation degree can be lowered by suitably selecting R¹, R² and R³ in the formula (1). For example, even for the glycerin diacet monoester (C-1), total acetylation degree can be lowered by suitably selecting R¹, R² and R³. Thus, from the viewpoint of safety and hygiene of a food product, it is preferable to use the glycerin diacet monoester (C-1) having low total acetylation degree, to use the (C-1) in combination with the glycerin monoacet monoester (C-2), or to use only the glycerin monoacet monoester (C-2).
From the viewpoint of suppressing bleed-out and having plasticizing performance, the glycerin monoacet monoester (C-2) is more advantageous than the glycerin diacet monoester (C-1). However, from the viewpoint of reducing odor causing substance, it is disadvantageous than the glycerin diacet monoester (C-1). As such, by employing the constitution of forming a surface layer as described below, it is preferable to have the odor completely suppressed. Thickness of a surface layer for such case is preferably, from the viewpoint of suppressing odor, from 20 to 65% with respect to the total thickness of the film.
When the film is used as a wrap film for packaging a food product, the particularly preferred embodiment includes that the plasticizer is selected to lower the total acetylation degree and the surface layer is formed with thickness ratio of from 20 to 65%. By having such constitution, sufficient and stable plasticizing performance can be obtained while bleed-out and occurrence of odor are suppressed.

In addition to the above, glycerin fatty acid ester can be also added. Type of the ester is not specifically limited and examples thereof include polyglycerin fatty acid esters such as diglycerin, triglycerin, and tetraglycerin as well as monoglyceride, diglyceride, triglyceride, and glycerin diacet monoester.

For obtaining good compatibility with the lactic acid polymer (B), molecular weight of the glycerin fatty acid ester is preferably 2,000 or less, and more preferably 1,500 or less.

Commercially available plasticizer can be also used. Examples thereof include "Rikemal PL019", "Rikemal PL012", and "Rikemal PL819" (trade names, all manufactured by Riken Vitamin Co., Ltd.).

From the viewpoint of processability, blending amount of the plasticizer (C) is preferably low. It is preferable that the plasticizer (C) is mixed in an amount of 1 to 30 parts by mass, in particular 1 to 20 parts by mass, with respect to 100 parts by mass of the lactic acid polymer (B). By rendering the mixing amount of the plasticizer (C) be 30 parts by mass or less, extreme decrease in melting viscosity of the lactic acid resin composition can be avoided and the difference between fluidity and elasticity of the surface and back layers can be maintained at low level. Specifically, processability is improved when coextrusion is made with surface and back layers (for example, the olefin polymer (A)) for producing a film, and as a result it becomes possible to obtain a film with excellent appearance without having any stripe pattern or whitening, or the like. Further, when the film is stretched, elasticity of the film can be easily adjusted with the surface and layer (for example, the olefin polymer (A)) within a broad range of temperature so that processability during stretching can be also improved.

### (Other blending components)

For the production of an intermediate layer of the multilayer film of the invention, in addition to the lactic acid polymer (B) and the plasticizer (C), the chain extender (E) for increasing molecular weight, the olefin polymer (F), or both of them may be also blended.

### (Chain extender (E))

By blending the chain extender (E), the molecular weight of the lactic acid composition comprising the lactic acid polymer (B) and the plasticizer (C) is increased so that degradation of the lactic acid polymer (B) in the film after film production can be inhibited. Thus, the generation of an oligomer included in the lactic acid polymer (B) is inhibited, and therefore generation of odor can be further suppressed.

As for the chain extender (E) to be used, it is not specifically limited if it has an effect of increasing molecular weight of the lactic acid composition comprising the lactic acid polymer (B) and the plasticizer (C). Preferred examples thereof include a compound containing an epoxy group, a compound containing acid anhydride, a compound containing an oxazoline group, a compound containing an isocyanate group, a compound containing a carbodiimide group, and non-crystalline PTFE with high molecular weight. In particular, as having a significant effect of increasing the molecular weight, the polyfunctional epoxy compound is preferably used.

The polyfunctional epoxy compound indicates a compound which has at least two epoxy groups (i.e., oxirane ring) in the molecule. Specific examples thereof include a so called bisphenol epoxy resin produced by condensation between bisphenol A and epichlorohydrin, a resorcin epoxy resin, a Novoloc epoxy resin which is multifunctional epoxy obtained by glycidylation of phenol Novoloc or linear cresol Novoloc with high molecular weight, an aliphatic epoxy resin, an alicyclic epoxy resin, a polyglycidyl amine epoxy, a styrene copolymer containing an epoxy group, and a polyester copolymer containing an epoxy group. Of these, from the viewpoint of increasing molecular weight, the styrene copolymer containing an epoxy group is most preferably used.

The styrene copolymer can be obtained by copolymerization of a vinyl monomer containing an epoxy group with styrene.
As a vinyl monomer containing an epoxy group, glycidyl (meth)acrylate or (meth)acrylate having a cyclohexane oxide structure, and (meth)acryl glycidyl ether, or the like, can be used. Glycidyl (meth) acrylate is preferable.
The styrene copolymer containing an epoxy group may be used in combination with any additional vinyl monomer having no epoxy group other than styrene within the range that the effect of the invention is not impaired.

From the viewpoint of increasing the molecular weight of the lactic acid composition, epoxy value of the styrene copolymer is preferably from 0.1 to 10 meq/g, more preferably from 0.5 to 5 meq/g, and most preferably from 1.0 to 3 meq/g.
Further, from the viewpoint of melting residence stability of the resin composition, weight average molecular weight of the styrene copolymer is preferably from 500 to 50,000, more preferably from 1,000 to 30,000, still more preferably from 2,000 to 20,000, and particularly preferably less than 3,000.

Weight average molecular weight of the lactic acid composition after blending with the chain extender (E) is preferably from 150,000 to 400,000, more preferably from 180,000 to 400,000, and still more preferably from 200,000 to 400,000. When the molecular weight is 150,000 or more, generation of lactic acid oligomer due to degradation of the lactic acid polymer (B) can be significantly inhibited. When it is 400,000 or less, melting viscosity becomes very high, and therefore molding processability is not impaired.
Addition amount of the chain extender (E) is determined so as to obtain the weight average molecular weight range described above. The addition amount of the additives is preferably 0.05 to 10 parts by mass in the lactic acid composition. More preferably, it is added in an amount of 0.05 to 5 parts by weight, and still more preferably in amount 0.1 to 3 parts by mass.

Examples of the commercially available chain extender (E) that is used for the multilayer film of the invention include "ARUFON UG series" (trade name, manufactured by Toagosei Company, Limited) and "JoncrylADR series" (trade name, manufactured by BASF).

### (Olefin polymer (F))

The olefin polymer (F) contained in an intermediate layer may be the same olefin polymer as the olefin polymer (A) which constitutes the surface layer, or an olefin polymer different from the olefin polymer (A). Preferably, it is the same olefin polymer as the olefin polymer (A). When the olefin polymer (F) is the same olefin polymer as the olefin polymer (A) which constitutes the surface layer, not only the adhesiveness between the intermediate layer and the surface layer can be enhanced and the dynamic properties of the entire film can be improved, but also the material cost can be reduced as the trimming loss caused by trimming both ends of a film can be added back as a raw material for constituting the intermediate layer so that waste of the raw materials can be avoided.

The most suitable olefin polymer (F) includes an ethylene-vinyl acetate copolymer having vinyl acetate content of from 10 to 60% by mass. The ethylene-vinyl acetate copolymer can be also appropriately used as the olefin polymer (A), which is the main component of the surface layer. In addition, it has practically no problem in terms of transparency, dynamic properties, and material cost, when a recycle resin generated as trimming loss is added, or the like, and it can be also stably obtained as an industrial material.

Mixing ratio of the olefin polymer (F) is, in terms of mass ratio with respect to the lactic acid polymer (B) in an intermediate layer (i.e., (B):(F)), from 1:99 to 50:50, in particular from 5:95 to 50:50. Of these, it is preferably mixed to achieve the mixing ratio of from 10:90 to 45:55.

Within the range that the effect of the invention is not impaired, in the intermediate layer, additives such as heat stabilizer, anti-oxidant, UV absorbent, anti-blocking agent, photo stabilizer, nucleating agent, anti-hydrolysis agent, and deodorant can be added.
For example, to maintain the practical property of the multilayer film of the invention, by blending a carbodiimide compound preferably in an amount of from 0.1 to 3 parts by mass, more preferably from 0.5 to 1 parts by mass with respect to 100 parts by mass of the composition which constitutes the intermediate layer, weight average molecular weight can be increased. When it is smaller than the range, effect of increasing the weight average molecular weight often becomes insufficient. On the other hand, when it is greater than the range, a fisheye or a gel is sometimes produced during film molding, and therefore undesirable.

To provide the intermediate layer with a function such as anti-fogging property, antistaticity, sliding property, and adhesiveness, various additives as follows may be appropriately blended.
Examples thereof include aliphatic alcohol fatty acid ester between aliphatic alcohol having 1 to 12 carbon atoms, preferably 1 to 6 carbon atoms and fatty acid with 10 to 22 carbon atoms, preferably 12 to 18 carbon atoms, specifically, monoglycerin oleate, polyglycerin oleate, polyglycerin polyrecinoleate, glycerin trirecinoleate, glycerin acetylrecinoleate, polyglycerin stearate, polyglycerin laurate, methylacetyl ricinate, ethylacetyl ricinate, butylacetyl ricinate, propylene glycol oleate, propylene glycol laurate, pentaerythritol oleate, polyethylene glycol oleate, polypropylene glycol oleate, sorbitan oleate, sorbitan laurate, polyethylene glycol sorbitan oleate, and polyethylene glycol sorbitan laurate, and the like, and polyalkylene ether polyol, specifically polyethylene glycol and polypropylene glycol, and the like, further, paraffin-based oil, and at least one of them can be blended in an amount of 0.1 to 12 parts by mass, and preferably 1 to 8 parts by mass with respect to 100 parts by mass of the resin component.

### (Lactic acid oligomer (D))

The intermediate layer may contain the lactic acid oligomer (D) that is produced according to degradation of the lactic acid polymer (B). Representative examples of the lactic acid oligomer include a cyclic dimer lactide of lactic acid.

### <Multilayer constitution>

The multilayer film of the invention has at least three layers including two surface layers that comprise the olefin polymer (A) as a main component and an intermediate layer that comprises a lactic acid polymer (B) and a plasticizer (C) as a main component. With the multilayer film having three layers, an anti-fogging agent, or the like, can be included in the surface layer so that an anti-fogging property, or the like, of the film can be improved.

Without departing from the gist of the invention, for improving dynamic properties or interlayer adhesiveness, or the like, another layer (herein below, abbreviated as layer P) that is different from the surface layer and the intermediate layer may be appropriately disposed, if necessary. In such case, an adhesive layer and/or a recycle layer is preferable.
Further, a layer having the same composition as the surface layer (herein below, abbreviated as layer S) may be included as an intermediate layer. It is also possible that at least two layers having the same composition as the intermediate layer (herein below, abbreviated as layer M) are disposed between two surface layers.
Representative examples thereof include a 3-layer structure of (layer S)/(layer M)/(Iayer S), a 4-layer structure of (layer S)/(layer P)/(layer M)/(layer S), and a 5-layer structure of (layer S)/(layer P)/(layer M)/(layer P)/(layer S) and (layer S)/(layer M)/(layer P)/(layer M)/(layer S), or the like. In this case, resin composition and thickness ratio of each layer can be the same or different from each other.

When an adhesive layer is employed as layer P, type of the resin as a main component is not specifically limited. Preferably, it is a resin containing as a main component any one type of a copolymer of soft aromatic hydrocarbon and conjugated diene hydrocarbon, hydrogenated derivative of this polymer, an ethylene-vinyl acetate copolymer having vinyl acetate content of from 30 to 80% by mass, modified polyolefin resin, and a mixture resin of lactic acid and acrylate, which is a mixture resin of a polymer block copolymer having an acrylic ester unit as a main component and an acrylic block copolymer with a polymer block having a methacrylic ester unit as a main component, or a combination of two or more of them.
Further, the resin which constitutes the surface layer and the intermediate layer can be recycled and used for an adhesive layer. For example, the trimming loss that is arisen from trimming both ends of a film can be utilized for forming an adhesive layer so that waste of the raw materials can be avoided, and therefore the material cost can be reduced.

The multilayer film of the invention may contain a recycle layer. For example, by utilizing the trimming loss that is arisen from trimming both ends of a film, the left over after forming an adhesive layer, or a defective molded product, or the like, a recycle layer can be produced. The material cost can be reduced as the waste of the raw materials is avoided.
The recycle layer may be formed between the surface layer and the adhesive layer, or it may be formed between the intermediate layer and the adhesive layer. For example, after forming a 2-layer constitution of a surface layer and an intermediate layer or an adhesive layer, the trimming loss from both ends of the film is returned to one layer so that a recycle layer can be formed between the surface layer and the adhesive layer, or between the intermediate layer and the adhesive layer. In such case, in addition to thickness ratio or composition ratio of each layer, depending on which layer of the surface layer, intermediate layer and adhesive layer serves as a base for receiving the returned loss, mixing ratio of the three components can be adjusted.
As an alternative for the recycle layer, a mixture containing the olefin polymer (A) and the lactic acid polymer (B) can be also used.

### (Thickness)

With regard to the multilayer film of the invention, thickness ratio of the surface layer with respect to the total film thickness is preferably from 20 to 65%. When the thickness ratio of the surface layer is within this range, migration of the lactic acid oligomer of the lactic acid polymer and the plasticizer, both are the main component of an intermediate layer, to the surface can be prevented, and as a result, effect of suppressing odor derived therefrom is obtained.
Further, a film for packaging which does not suffer from any blocking even when the film is stored in a rolled state, and favorable fog preventing property or adhesiveness to a container, less decrease in molecular weight due to hydrolysis with passage of time, and favorable adhesiveness among each layers can be provided.

With regard to the thickness of an intermediate layer, when processability and flexibility for stable production of a film are important, the thickness ratio of the intermediate layer with respect to the total film thickness is preferably from 35 to 65%, and more preferably from 35 to 60%. When the thickness ratio of the intermediate layer is within this range, a film satisfying each characteristics (E' and tanδ) derived from the dynamic viscoelasticity can be easily designed. Further, when a film is molded according to T die method, for example, stable film producibility is obtained. Still further, dynamic properties for providing a wrap film for packaging a food product with suitable cuttability or softening properties for giving adhesiveness to a container can be easily obtained.

When the cuttability, adhesiveness to a container, and also the requirement at plant level, i.e., CO₂ reduction, or the like, are more important, the thickness ratio of the intermediate layer with respect to the total film thickness is preferably from 60 to 90%, and more preferably from 65 to 90%.
Further, when there are two or more intermediate layers as described above, the thickness ratio is calculated by adding the thickness of all intermediate layers.

Total thickness of the multilayer film of the invention can be appropriately determined depending on specific use. When it is used as a wrap film for food packaging, for example, it is from 6 µm to 30 µm, preferably from 7 µm to 20 µm, and more preferably from 7 µm to 15 µm.

### <Characteristic property values>

It is important that (1) in the multilayer film of the invention the detected amount of lactic acid oligomer components is 50 ng/cm² or less, or the amount of odor components derived from the plasticizer is 50 ng/cm² or less wherein the detection is made according to detection condition described below. Preferably, the detected amount of lactic acid oligomer components is 50 ng/cm² or less and also the amount of odor components derived from the plasticizer is 50 ng/cm² or less wherein the detection is made according to detection condition described below.
When the lactic acid polymer (B) is mixed with the plasticizer (C), a great amount of the lactic acid oligomer is generated as thermal degradation of the lactic acid polymer (B) is promoted by the plasticizer when they are melt and molded. As it is believed that the lactic acid oligomer and the volatile components derived from the plasticizer are the components responsible for annoying odor, the content of the lactic acid oligomer and the content of odor component derived from the plasticizer were controlled. As a result, it becomes possible to remove the annoying odor.
When the odor component derived from the plasticizer, which is detected from the multilayer film of the invention, is greater than 50 ng/cm², unpleasant odor may be easily generated when the film is used under heating. Further, when it is used for a food product, it has a possibility of causing a problem of relaying the odor to the food product. From this point of view, the odor component which is derived from the plasticizer and detected from the multilayer film of the invention is preferably smaller than 40 ng/cm². More preferably, it is smaller than 30 ng/cm². In addition, the content of the lactic acid oligomer is preferably smaller than 40 ng/cm², and more preferably smaller than 30 ng/cm².

In order to reduce the content of the lactic acid oligomer or the content of the odor component derived from the plasticizer, it is most effective to carry out a process of reducing odor components, i.e., reducing the lactic acid oligomer (D) and the volatile components of the plasticizer (C) in the intermediate layer.
As a method of reducing the content of the lactic acid oligomer, a method of removing or reducing in advance the lactic acid oligomer (D) contained in the raw material for the lactic acid polymer (B), or a method of removing or reducing the lactic acid oligomer (D) either during or after molding or processing can be considered.
Meanwhile, as a method of reducing the volatile components of the plasticizer (C), there are the method of selecting a plasticizer with high boiling point (i.e., equilibrium vapor pressure), the method of reducing the addition amount of the plasticizer (C), and the method of removing or reducing the volatile components of the plasticizer (C) either during or after molding or processing.
Of these, as high efficiency can be obtained if both the lactic acid oligomer and the volatile components of the plasticizer (C) are reduced simultaneously, it is preferable to select a method of removing or reducing the odor components either during or after molding or processing to remove both the lactic acid oligomer generated during the melt kneading process of the lactic acid polymer (B) and the plasticizer (C) and the volatile components of the plasticizer (C) generated according to heating during the melt kneading.

Further, when the multilayer film of the invention is prepared to exhibit, (2) as measured at a frequency of 10 Hz and temperature of 20°C by the dynamic viscoelasticity measuring method, a storage modulus (E') of 1 GPa to 4 GPa, to exhibit (3) a peak temperature of loss tangent (tanδ) of 20 to 60°C, and (4) a peak value in the range of 0.1 to 0.8, the multilayer film of the invention can be appropriately used as a small size wrap film roll.

If the storage modulus (E') is 1 GPa or more, the film has sufficient strength, and therefore, when used as a small size wrap film roll, a good taking-out property can be obtained at the time of taking the film out of a paper box. On the other hand, if the storage modulus (E') is 4 GPa or less, good cuttability can be obtained at the time of taking the film out of a paper box when it is used as a small size wrap film roll.
Further, when the peak temperature of loss tangent (tanδ) is 60°C or less and the peak value is 0.1 or more, recovery behavior of the film against deformation does not occur instantly. Thus, when a container is packaged with the film, good adhesiveness onto the container is obtained without having instant film recovery. Still further, when the peak temperature of loss tangent (tanδ) is 20°C or more and the peak value is 0.8 or less, no plastic deformation occurs so as not to cause any problem for general method of using it, and therefore desirable.
Meanwhile, the loss tangent (tanδ) means loss elasticity (E") ratio with respect to a storage modulus (E'), i.e., loss tangent (tanδ = E"/E'). It indicates that, in the temperature range having high loss tangent value, loss elasticity (E") ratio of the material, i.e., contribution degree of the viscosity to viscoelasticity, is high. Thus, evaluation of the loss tangent (tanδ) value and the temperature range exhibiting high loss tangent value can be an important criterion for determining adhesiveness onto a container at the time of packaging or for determining a stress relaxation behavior during packaging process.

According to appropriate balancing among the selection of constitutional components for the intermediate layer and the surface layer (i.e., type, molecular weight, or Tg of the resin as a main component, presence or absence and type of a plasticizer, mixing ratio between the components, LD ratio for lactic acid polymer, or the like), thickness ratio between the intermediate layer and the surface layer, film producing method, and processing condition (e.g., condition for thermal treatment after producing the film), a film satisfying all the requirement from (2) to (4) above can be produced.

### <Production method>

Method of producing the multilayer film of the invention is described below, but the invention is not limited to the following method.

The multilayer film of the invention can be produced, for example, by preparing in advance an intermediate layer forming composition which constitutes the intermediate layer and a surface layer forming composition which constitutes the surface layer, adding each layer forming composition separately to an extruder followed by melt-kneading, wherein an odor causing substance is withdrawn by suction through a vent port of the extruder during the melt-kneading process of the intermediate layer forming composition, producing a film by extrusion with lamination, and if necessary, stretching or heat-treating the film.

### (Preparation of intermediate layer forming composition)

As for the method of adding the plasticizer (C) to the lactic acid polymer (B), for example, it is possible that a mixture pellet of a master batch of lactic acid polymer containing the plasticizer (C) at high concentration and the lactic acid polymer as a raw material is added to an extruder and melt-kneaded. However, to minimize thermal deterioration of the composition and production of the lactic acid oligomer, it is preferable that the lactic acid polymer as a raw material and the plasticizer (C) are directly added to a film extruder using a monoaxial or biaxial extruder. In addition, it is preferable to withdraw an odor causing material by suction through a vent port of the extruder during the melt-kneading process.
More specifically, it is preferable that the lactic acid polymer as a raw material is dried in advance at 100 to 110°C and added into an extruder, a predetermined amount of the plasticizer is added through the first vent port of extruder followed by melt-kneading, pressure is lowered from a vent port located downstream of the extruder (referred to as a "second vent port" or "depressurizing vent port") to suck the lactic acid oligomer or the volatile components of the plasticizer (C) and withdraw them to outside of the extruder.
When a master batch prepared in advance is used, the film can be produced in the same manner with depressurization from the vent port located downstream of the extruder. Further, at the time of producing the master batch, it is also preferable that pelletization is carried out while depressurization.

As for the constitution of an extruder used, it is necessary to place a mixing unit after a unit for supplying a plasticizer, and at least one depressurizing vent ports are formed further downstream of the supplying unit. Further, the ratio between screw length and screw diameter (L/D) of the extruder can be arbitrarily set. However, for sufficient kneading, L/D of 20 or more is preferable.

With regard to the level of depressurization at the vent port, it is necessary to have 700 mmHg or less. Preferably it is 500 mmHg or less. More preferably it is 300 mmHg or less. When the pressure at depressurizing vent port is more than 700 mmHg, it is possible that reduction of odor component becomes insufficient.

With regard to the depressurizing vent port defined by the invention, it can be placed at any position which is downstream of a site at which mixing with the plasticizer occurs as the resin temperature is the same or higher than the melting point of the resin and is upstream of the highest point of an extruder cylinder. The number of the vent port is not limited to one, and a plurality of vent ports can be installed.

### (Preparation of layer forming composition other than intermediate layer)

Regarding the raw materials other than those for the intermediate layer, when constitutional material for each layer is a mixture composition, it is preferable that they are mixed with each other in advance, and if necessary, palletized. As a mixing method, pre-compounding can be carried out in advance by using a same-direction biaxial extruder, a kneader, a Henschel mixer, or the like, or it is also possible that each material is dry blended and added directly into a film extruder. Although molecular weight decrease caused by degradation of raw material should be taken into consideration for any mixing method, it is preferable to carry out pre-compounding to achieve homogeneous mixing.

### (Extrusion, film forming and stretching)

Next, each layer forming composition that is melt-extruded after being added to an extruder is coextruded for lamination by T die molding or inflation molding.
At that time, practically it is preferable that the melt extruded from a T die is rapidly cooled with a casting roll, or the like, and collected to produce a film.

When heat resistance or cuttability of the film is important, it is preferable to perform a longitudinal stretching by which a melt extruded sheet is cooled and solidified by a cooling roll, heated at the temperature below the crystallization temperature of the resin, and stretched 1.2 to 5.0 fold in longitudinal direction by taking advantage of a difference in speed between nip rolls, or a flat stretching by which film is stretched 1.2 to 5.0 fold by stepwise biaxial stretching and/or simultaneous biaxial stretching in both horizontal and longitudinal direction of the film.
With respect to the extrusion temperature, the extrusion sheet temperature is preferably set in the range of 30 to 90°C. More preferably, it is set in the range of 40 to 90°C. When the stretching temperature is within this range, both the lactic acid resin composition of the intermediate layer and the olefin polymer (A) of the surface layer can have the elasticity that is suitable for stretching, and therefore desirable. Further, stretching ratio is preferably in the range of 1.2 to 5.0 fold, and more preferably in the range of 1.5 to 4.0 fold. When the stretching ratio is within this range, cuttability can be improved without having breakage or whitening of an extrusion sheet.

Further, when producibility and/or economic value is more important, it is preferable to melt-knead the resin materials at an annular die and carry out inflation molding. As a cooling method for such case, any one of a method of cooling from the external surface of a tube and a method of cooling from both the external and internal surfaces can be employed.

Depending on the purpose such as reducing heat shrinkage or natural shrinkage or inhibiting width shrinkage, or the like, the film obtained as above may be subjected to heat treatment such as longitudinal stretching between heating rolls, various thermal fixing, and aging, or the like.
For the heat treatment, the heat treatment temperature is preferably set in the range of 40 to 100°C. More preferably, it is set in the range of 60 to 90°C. When the heat treatment temperature is 40°C or more, the heat treatment effect can be obtained at sufficient level. When it is 100°C or less, molding problems such as film adhesion to a roll, or the like, can be avoided.

Further, for the purpose of giving or promoting an anti-fogging property, anti-staticity, and adhesiveness, or the like, a treatment such as corona treatment or maturation, or a surface treatment or surface modification such as printing and coating, or the like, may be performed.

### <Explanation of the terms>

It should be noted that in this description, the term "the main component" means to allow inclusion of other components within the range which does not impede function of the corresponding main component. Although the term does not restrict the content ratio of the main component (sum of the content when two or more components are presented as the main component), the main component is 50% by mass or more, preferably 70% by mass or more, and particularly preferably 90% by mass or more (including 100% by mass) in the composition.

In general, "sheet" refers to a thin, flat product generally having a relatively small thickness as compared with length and width in accordance with the definition in Japanese Industrial Standards (JIS). On the other hand, "film" refers to a thin, flat product having a relatively very small thickness as compared with length and width and a maximum thickness that is arbitrarily limited and is usually supplied in the form of a roll (Japan Industrial Standards JISK6900). In terms of thickness, in narrow sense it is referred to as sheet when the thickness is 100 µm or more while it is referred as film when thickness is less than 100 µm, for example. However, as there is a no clear boundary between "sheet" and "film" and in the invention it is not necessary to distinguish them in literal sense, in the invention the "film" may be understood as also including "sheet" and vice versa.

In the invention, when the expression "X to Y" (X and Y are arbitrary numbers) is used, unless specifically indicated otherwise, it includes the meaning of "X or more but Y or less" and at the same time the meanings of "preferably more than X" and "preferably less than Y."
In addition, in the invention, when the expression "X or more" (X is an arbitrary number) is used, unless specifically indicated otherwise, it includes the meaning of "preferably more than X", and when the expression "Y or less" (Y is an arbitrary number) is used, unless specifically indicated otherwise, it includes the meaning of "preferably less than Y."

### EXAMPLES

Hereinafter, examples and comparative examples will be shown to describe the invention in greater detail, however, the invention is not limited to them.
Note that the various measurements and the evaluations shown in the Detailed Description were performed as described below. Herein, flow direction of the film from an extruder is referred to as a longitudinal direction (herein below, it may be described as "MD"), and the direction perpendicular thereto is referred to as a horizontal direction (herein below, it may be described as "TD").

### (1) Quantification of odor components

Quantification of odor components was carried out by mass analysis using head space gas chromatography (HS-GC-MS).
All the samples were prepared to have a size of 5 cm². For a head space sampler (HS), JHS-100A (trade name, manufactured by Japan Analytical Industry Co., Ltd.) was used. For a gas chromatography (GC), GC-17A (trade name, manufactured by Shimadzu Corporation) was used. Sample temperature was 60°C, heating time was 30 min, and a capillary column having inner diameter of 0.25 mm and length of 30 m was used as a GC column. After maintaining the column temperature at 40°C for 1 min, the temperature was increased to 200°C at a rate of 10°C/min, and the temperature of an injection part was 280°C.
Quantification with a mass analyzer (MS) was carried out by using QP-5050 (trade name, manufactured by Shimadzu Corporation) and the data was obtained in terms of hexadecane.
The odor components measured by each Example and Comparative example correspond to cyclic dimer lactide (molecular weight: 144), i.e., a lactic acid oligomer component, and glycerin triacetate or glycerin diacetate, i.e., an odor component derived from a plasticizer.

### (2) E' and tanδ

Based on dynamic viscoelasticity measurement method described in JIS K-7198A, measurement was carried out from -50°C to 150°C by using the dynamic viscoelastometer DVA-200 (trade name, manufactured by IT KEISOKU SEIGYO KK) along the horizontal direction (TD) of the film with vibration frequency of 10 Hz, a strain of 0.1 %, and temperature increase rate of 1°C/min. From the data obtained, storage modulus (E') at the temperature of 20°C and peak temperature and peak value of loss tangent (tanδ) were calculated.

### (3) Molecular weight retention ratio (Wet heat durability)

The film obtained was kept for a month in the humidity incubator LH-112 (trade name, manufactured by TABAI ESPEC CORP) which had been adjusted to 40°C × 90% by mass.
To gel-permeation chromatography HLS-8120GPC (trade name, manufactured by TOSOH CORPORATION), GPC-800CP of chromatography column Shim-Pack series (trade name, manufactured by Shimadzu Corporation) was attached, and under the condition including chloroform as a solvent, solution concentration of 0.2 wt/vol% by mass, liquid injection amount of 200 µL, solvent flow rate of 1.0 ml/min, and solvent temperature of 40°C, mass average molecular weight of the film was measured before and after the test (i.e., before and after keeping the film for one month as described above). In Table 1, the mass average molecular weight calculated in terms of polystyrene is given. The mass average molecular weight of standard polystyrene used was 2,000,000, 670,000, 110,000, 35,000, 10,000, 4,000, and 600.

From the mass average molecular weight before and after the test above, molecular weight retention ratio (% by mass) was calculated and the evaluation was carried out based on the following criteria.
○(circle): molecular weight retention ratio is from 60% by mass to 100% by mass, and the molecular weight after passage of time is 100,000 or more.
X (cross): molecular weight retention ratio is 0% by mass or more but less than 60% by mass, and the molecular weight after passage of time is less than 100,000.

### (4) Film production stability

When a film is produced, especially when glass transition temperature (Tg) is close to room temperature, sometimes the film adheres to a casting roll at the time of extrusion, causing a difficulty in stable film production.

Thus, casting stability and roll adhesion degree were measured when a film is molded by T die molding method. The results are evaluated according to the following criteria.
⊚(double circle): very stable
○(circle): stable
X (cross): unstable.

### (5) Anti-blocking property

Rolled product of the film obtained was kept for 5 days in an incubator with temperature of 43°C and relative humidity of 40%. Then, state of the surface and re-winding property of the film were determined, and the results are evaluated according to the following criteria.

⊚(double circle): A level at which no blocking occurs between films
○(circle): A level at which slight blocking occurs between films but it is not practically problematic.
X (cross): A level at which peeling is impossible due to blocking between films and re-winding is impossible, and thus it is practically problematic.

### (6) Container adhesiveness

A porcelain container having a rice bowl shape (diameter of 10 cm and depth of 5 cm) was packaged and container adhesiveness was evaluated according to the following criteria.

⊚(double circle): A level at which suitable packaging can be made.
○(circle): A level at which container shape is not perfectly shown but it is not practically problematic.
X (cross): A level at which the film does not adhere to the container and slips out, and thus it is practically problematic.

### (7) Anti-fogging property

On one side of the opening side of a SUS304 cylinder (diameter of 50 mm, height of 80 mm), the film was applied without creating any crease. The other opening side of the cylinder to which no film was applied was immersed in water at 20°C with immersion depth of 30 mm while outside air temperature is from 0 to 5°C. One hour after starting the immersion, the anti-fogging property was observed with a naked eye and the results were evaluated according to the following criteria.

⊚(double circle): Water film having even moisture distribution is obtained without any water drop
○(circle): Water film having even moisture distribution is obtained but tiny water drops are present in places
X (cross): Water drops with diameter of about 3 mm are found

### (8) Cuttability

The film was inserted into a carton box having a metal saw blade and the film was taken out and cut. Cuttability was evaluated according to the following criteria.

⊚(double circle): A level at which the film can be used without any uneasy feeling at the time of cutting.
○(circle): A level at which slight resistance is felt at the time of cutting but it is not practically problematic.
X (cross): A level at which the wrap is caught in the metal saw blade and excessive resistance is felt.

### (Example 1)

For a composition for forming both surface layers, linear low density polyethylene "NUCG5361" (trade name, manufactured by Nippon Unicar Company Limited, MFR: 4.0 g/10 min, crystallization enthalpy: Δ100 J/g, refractive index 1.51) (herein below, abbreviated as "A-1 ") and linear low density polyethylene "NUCG5371" (trade name, manufactured by Nippon Unicar Company Limited, MFR: 12.0 g/10 min, refractive index 1.51) (herein below, abbreviated as "A-2") as the olefin polymer (A) were mixed with each other with the mass ratio of A-1/A-2 = 50/50. Further, for an anti-fogging agent containing diglycerin oleate as a main component, 5.0 parts by mass of "MJ-1" (trade name, manufactured by Riken Vitamin Co., Ltd.) with respect to 100 parts by mass of the olefin polymer (A) were added into a same-direction biaxial extruder with extrusion temperature of 180 to 200°C and melt-kneaded.

Meanwhile, for a composition for forming an intermediate layer, "NatureWorks 4032D" (trade name, manufactured by Nature Works, (L form/D form = 98.6/1.4, weight average molecular weight: 200,000) (herein below, abbreviated as "B-1") and "NatureWorks 4060D" (trade name, manufactured by Nature Works, L form/D form = 87/13, weight average molecular weight: 200,000) (herein below, abbreviated as "B-2") as the lactic acid polymer (B) were dried in advance at 110°C for at least 6 hours and mixed with each other with the mass ratio of B-1/B-2 = 60/40. The chain extender (E) (styrene-acryl oligomer containing an epoxy group; "JONCRYLADR4368" (trade name, manufactured by BASF, molecular weight Mn < 3000)) was blended in advance in an amount of 0.2 parts by mass with respect to 100 parts by mass of the component (B), and added into a same-direction biaxial extruder having extrusion temperature of 180°C. Thereafter, as the plasticizer (C), the glycerin diacet monoester (C-1) was injected from the first vent port of the extruder via a constant delivery pump to have 15 parts by mass with respect to 100 parts by mass of the component (B), and then melt-kneaded. Further, suction, withdrawing and depressurization (300 mmHg or less) were carried out by using a vacuum pump at vent port located downstream of the extruder.

The resin composition for forming both surface layers as prepared above by melt-kneading and the resin composition for forming an intermediate layer were supplied from a separate extruder, combined with each other, and co-extruded with 3-layer T-die (temperature of 200°C and die gap of 2 mm). After rapid cooling in a cast roll with temperature of 30°C, a packaging film having total thickness of 12 µm (surface layer/intermediate layer/surface layer = 1.5 µm/9 µm/1.5 µm) was obtained. The evaluation result of thus-obtained film is shown in Table 1.

### (Example 2)

Regarding polylactic acid as the component (B), mixing ratio between B-1 and B-2 was set to have B-1/B-2 = 40/60. Other than that, a packaging film having total thickness of 12 µm (surface layer/intermediate layer/surface layer = 1.5 µm/9 µm/1.5 µm) was obtained in the same manner as Example 1. The evaluation result of thus-obtained film is shown in Table 1.

### (Example 3)

Regarding a plasticizer as the component (C), mixing ratio between the glycerin diacet monoester (C-1) and the glycerin monoacet monoester (C-2) was set to have (C-1)/(C-2) = 73/27. 13 parts by mass of the plasticizer (C) containing this mixture was mixed with 100 parts by mass of the component (B). Other than that, a packaging film having total thickness of 12 µm (surface layer/intermediate layer/surface layer = 1.5 µm/9 µm/1.5 µm) was obtained in the same manner as Example 1. The evaluation result of thus-obtained film is shown in Table 1.

### (Example 4)

Coextrusion was performed with the same constitution as Example 3 to obtain a raw film having total thickness of 36 µm (surface layer/intermediate layer/surface layer = 4.5 µm/27 µm/4.5 µm). Thereafter, with roll stretching at stretching temperature of 70°C, heat treatment temperature of 90°C, and stretching ratio of 3-fold, monoaxial stretching in MD was carried out. As a result, a packaging film having thickness of 12 µm was obtained. The evaluation result of thus-obtained film is shown in Table 1.

### (Comparative example 1)

The chain extender (E) was not added to the lactic acid polymer (B) and depressurization using a vacuum pump was not performed. Other than that, a packaging film having total thickness of 12 µm was obtained in the same manner as Example 1.

### (Comparative example 2)

Regarding the resin composition forming both surface layers and the anti-fogging agent in Example 1, a resin composition having the same composition as the resin composition for forming an intermediate layer was precompounded to give a pellet, which was then added to an extruder for both surface layers to form a substantially single layer. Depressurization using a vacuum pump was not performed. Other than that, a packaging film having total thickness of 12 µm was obtained in the same manner as Example 1.

### (Comparative example 3)

Regarding the resin composition for forming an intermediate layer in Example 1, the resin composition forming both surface layers and the anti-fogging agent were added to form a substantially single layer. No plasticizer was added. Depressurization using a vacuum pump was not performed. Other than that, a packaging film having total thickness of 12 µm was obtained in the same manner as Example 1. The evaluation result of thus-obtained film is shown in Table 1.

**[Table 1]**

| Evaluation item | Odor evaluation | | | | 20°C | | | 40°C × 90% by weight × 1 month mass average molecular weight | | | | Film production stability | Anti-blocking property | Container adhesiveness | Anti-fogging property | Cuttability |
|---|---|---|---|---|---|---|---|---|---|---|---|---|---|---|---|---|
| | Lactic acid oligomer | | Components derived from plasticizer | | E' | tanδ | | Before the test (-) | After the test (-) | Molecular weight retention ratio (%) | Molecular weight retention property | | | | | |
| | Ng/cm² | | | | (Gpa) | Peak temperature | (-) | | | | | | | | | |
| Example | 1 | 13 | | 11 | 1.2 | 42 | 0.60 | 2.8 × 10⁵ | 2.1 × 10⁵ | 74 | ○ | ○ | ○ | ○ | ○ | ○ |
| | 2 | 22 | | 18 | 1.1 | 38 | 0.65 | 2.7 × 10⁵ | 2.0 × 10⁵ | 74 | ○ | ○ | ○ | ○ | ○ | ○ |
| | 3 | 12 | | 19 | 1.9 | 44 | 0.60 | 2.7 × 10⁵ | 2.0 × 10⁵ | 76 | ○ | ○ | ○ | ○ | ○ | ○ |
| | 4 | 15 | | 26 | 2.6 | 54 | 0.49 | 2.4 × 10⁵ | 2.0 × 10⁵ | 81 | ○ | ○ | ○ | ○ | ○ | ⊚ |
| Comparative example | 1 | 77 | | 53 | 1.4 | 36 | 0.60 | 1.9 × 10⁵ | 1.4 × 10⁵ | 74 | ○ | ○ | ○ | ○ | ○ | ○ |
| | 2 | 120 | | 70 | 1.8 | 44 | 0.43 | 2.2 × 10⁵ | 9.3 × 10⁴ | 44 | X | X | X | ⊚ | X | ○ |
| | 3 | - | | - | 0.4 | -20-28 | 0.10 | - | - | - | - | ⓒ | ⊚ | X | ⊚ | ○ |

From Table 1, it was confirmed that the film obtained from Example 1 to Example 3 has reduced odor of packaging film and inhibited decrease in molecular weight over time. It was also confirmed that the film does not suffer from any blocking even when it is stored in a rolled state and it has a favorable anti-fogging property and container adhesiveness.
Further, it was found from Example 3 that by using a mixture of glycerin monoacet monoester and glycerin diacet monoester as the plasticizer (C), the physical properties that are equivalent to those of Examples 1 and 2 can be obtained even when only a small addition amount is used.
Still further, it was found from Example 4 that cuttability can be improved by stretching process.

On the other hand, when no chain extender is added to the lactic acid polymer and depressurization by using vacuum pump was not performed during film production (i.e., Comparative example 1), odor derived from the lactic acid oligomer and the plasticizer was easily noticed.
When there is no surface layer having the olefin polymer as a main component (i.e., Comparative example 2), favorable container adhesiveness was still obtained. However, film production stability, a blocking property and an anti-fogging property were insufficient, and odor derived from the lactic acid oligomer and the plasticizer was easily noticed. Furthermore, as molecular weight decrease over time due to hydrolysis occurs, it is problematic in terms of actual use characteristics.
When an intermediate layer having the lactic acid polymer resin composition as a main component is not included (i.e., Comparative example 3), no odor was noticed and a blocking property, an anti-fogging property, and film production stability were favorable. However, container adhesiveness was insufficient.

## Claims

1. A multilayer film comprising at least three layers including a surface layer and an intermediate layer containing a lactic acid polymer (B) and a plasticizer (C), wherein the thickness ratio of the surface layer with respect to the total thickness of the film is from 20 to 65%, and the detected amount of lactic acid oligomer components is controlled to 50 ng/cm² or less, or the amount of odor components derived from the plasticizer is controlled to 50 ng/cm² or less wherein the detection is made according to detection condition described below:
Detection condition: a head space gas chromatography mass analyzer (HS-GC-MS) is used, and detection is carried out by setting the sample temperature of the head space sampler (HS) at 60°C and heating time for 30 minutes.

2. The multilayer film according to claim 1, wherein the film exhibits, as measured at a frequency of 10 Hz and temperature of 20°C by the dynamic viscoelasticity measuring method, a storage modulus (E') of 1 GPa to 4 GPa and exhibits a peak temperature of loss tangent (tanδ) of 20 to 60°C and a peak value in the range of 0.1 to 0.8.

3. The multilayer film according to claim 1 or 2, wherein the intermediate layer comprises 1 to 30 parts by mass of the plasticizer (C) with respect to 100 parts by mass of the lactic acid polymer (B).

4. The multilayer film according to any one of claims 1 to 3, wherein the plasticizer (C) is glycerin fatty acid ester with molecular weight of 2,000 or less.

5. The multilayer film according to any one of claims 1 to 4, wherein the lactic acid polymer (B) is a mixture resin of at least two lactic acid polymers having different LD ratio.

6. The multilayer film according to any one of claims 1 to 5, wherein the main component of the surface layer is an olefin polymer comprising one of the resin selected from low density polyethylene, linear low density polyethylene, ethylene-vinyl acetate copolymer, ethylene-acrylate ester copolymer and ethylene-methacrylate ester copolymer, or a mixture resin comprising a combination of two or more of them.

7. The multilayer film according to any one of claims 1 to 6, wherein the multilayer film is a wrap film for packaging.

8. The multilayer film according to any one of claims 1 to 7, wherein the multilayer film is produced by performing an air withdrawing by suction through a vent port of a monoaxial or biaxial extruder during a process of melt-kneading the intermediate layer forming composition for the process of producing the multilayer film.
